# EUROPÄISCHE PATENTANMELDUNG

(11) **EP 0 825 597 A1**
(43) Veröffentlichungstag der Anmeldung: **25.02.1998**
(21) Anmeldenummer: 97202487.1
(22) Anmeldetag: 12.08.1997
(51) Int. Cl.: G11B 15/43, G11B 15/46, G03B 21/32

(54) **Filmabtaster mit Servoregelsystem**

(30) Priorität: 17.08.1996 DE 19633149
(71) Anmelder: Philips Patentverwaltung GmbH, 22335 Hamburg (DE); PHILIPS ELECTRONICS N.V., 5621 BA Eindhoven (NL)
(72) Erfinder: Eisenberg, Gerd, Dipl.-Ing., 22335 Hamburg (DE)
(74) Vertreter: Schmalz, Günther

(57) **Zusammenfassung**

Es wird ein Servosystem für ein Bandlaufwerk vorgeschlagen, welches eine Vorratsspule 2, eine Aufwickelspule 5 und jeweils einen jeder Spule zugeordneten Wickelmotor aufweist. Das Band wird mittels eines Capstan 4 über Bandzugfühlhebel 11, 12 von der Spule 2 auf die Spule 5 transportiert, wobei Signale erzeugt werden, welche die Drehzahl und Drehrichtung der Spulen, die Längsgeschwindigkeit des Bandes und die Stellung der Bandzugfühlhebel anzeigen. Weiterhin ist ein Mikroprozessor 23 vorgesehen, von dem in Abhängigkeit der vorgenannten, sich auf die Bandgeschwindigkeit sowie die Drehzahlen der Spulen beziehenden Signale der Durchmesser, der auf den Spulen befindlichen Bandwickel 17, 18 berechnet wird.

Um nun in einigen Betriebszuständen des Bandlaufwerks, wie beispielsweise Anfahren, Richtungswechsel, Abbremsen, in denen die Fühlhebel stärkere Ausgleichsbewegungen ausführen, die Bandwickeldurchmesser exakt berechnen zu können, sollen die von der Stellung der Bandzugfühlhebel abhängigen Signale einbezogen werden, indem die Stellung jedes Fühlhebels zu Beginn und am Ende der Messung der Bandlänge pro Wickelumdrehung erfaßt wird und das davon abgeleitete Signal für die Korrektur des bei der Messung der Bandlänge abgeleiteten Wertes dient.

## Beschreibung

Die Erfindung betrifft eine Vorrichtung mit Bandlaufwerk, insbesondere kinematografische Vorrichtungen wie beispielsweise einen Filmabtaster, mit einem Servoregelsystem für das Bandlaufwerk mit einer ersten Spule (Vorratsspule) und einer zweiten Spule (Aufwickelspule), jeweils einem jeder Spule zugeordneten Wickelmotor, je einem Bandzugfühlebel, einem mit dem Band in Wirkverbindung stehenden Bandantrieb mittels Capstan, Mitteln zur Erzeugung von Signalen, welche die Drehzahl und Drehrichtung der Spulen, die Längsgeschwindigkeit des Bandes und die Stellung der Bandzugfühlhebel anzeigen, und einem Mikroprozessor, von dem in Abhängigkeit der vorgenannten, sich auf die Bandgeschwindigkeit sowie die Drehzahl der Spulen beziehenden Signale der Durchmesser der auf den Spulen befindlichen Bandwickel berechnet wird. Die Erfindung betrifft desweiteren auch andere Vorrichtungen mit einem Bandlaufwerk, bspw. Magnetische Bandaufzeichnungs- bzw. Wiedergabesysteme als auch das Servoregelsystem als solches.

Ein solches Servoregelsystem ist bereits aus der EP 0 236 588 B1 für ein Magnetbandgerät bekannt, wobei aus den Durchmessern der Bandwickel ein Maß für das zur Regelung der Bandspannung notwendige Drehmoment gewonnen werden soll.

Die Bestimmung bzw. Berechnung der Durchmesser der Bandwickel von abgebender Vorratsspule bzw. aufnehmender Aufwickelspule ist bei einem Bandlaufwerk, sei es in einem Magnetbandgerät oder in einem Filmabtaster, außerdem deshalb wichtig, weil daraus beispielsweise die bisherige Spielzeit und auch die Rest-Spielzeit des Magnetbandes bzw. des Laufbildfilmes berechnet und danach angezeigt werden kann. Ferner können aus diesen Werten ein sogenanntes "Autostop"-Signal zum rechtzeitigen Anhalten der Wickelmotoren sowie weitere Regelparameter für den Bandzug oder Bandtransport gewonnen bzw. abgeleitet werden. Insbesondere bei Bandlaufwerken für hochwertige Geräte der Studiotechnik ist es besonders wichtig, daß die Bandwickeldurchmesser exakt ermittelt werden. Die Ermittlung der Wickeldurchmesser kann dabei z.B. so erfolgen, daß die Länge des transportierten Bandes, für die der Wickelmotor eine Umdrehung ausführt, gemessen wird. Dies gilt aber nur, wenn das vom Capstan transportierte Band auch vollständig vom Wickel aufgenommen bzw. abgegeben wird, d.h. bei einem im wesentlichen gleichförmigen Bandtransport.

In einigen Betriebszuständen des Bandlaufwerks, wie beispielsweise Anfahren, Richtungswechsel, Abbremsen, ist diese Bedingung nicht erfüllt. Hier wird für kurze Zeit Band vom Fühlhebel aufgenommen oder abgegeben. Tritt dies gerade am Ende der Meßdauer - d.h. der Wickelumdrehung - auf, so ist der Meßwert für die transportierte Bandlänge fehlerhaft, und die Berechnung des Wickeldurchmessers liefert somit einen falschen Wert.

Der Erfindung liegt daher die Aufgabe zugrunde, das eingangs genannte Servoregelsystem so zu verbessern, daß auch in Betriebsarten des Bandlaufwerkes, in denen der Fühlhebel stärkere Ausgleichsbewegungen ausführt, die Bandwickeldurchmesser exakt berechnet werden können.

Die Lösung dieser Aufgabe wird erfindungsgemäß dadurch erreicht, daß in die Berechnung der Durchmesser der Bandwickel die von der Stellung der Bandzugfühlhebel abhängigen Signale einbezogen werden, indem die Stellung jedes Fühlhebels zu Beginn und am Ende der Messung der Bandlänge pro Wickelumdrehung erfaßt wird und das davon abgeleitete Signal für die Korrektur des bei der Messung der Bandlänge abgeleiteten Wertes dient.

Das erfindungsgemäße Servoregelsystem für ein Bandlaufwerk hat den Vorteil, daß auch die Bandlänge, die vom Fühlhebel durch Ausgleichsbewegungen beim Anfahren, Anhalten oder Richtungswechsel des Bandes aufgenommen wird, bei der Berechnung der Bandwickeldurchmesser nicht unberücksichtigt bleibt.

In einer weiteren Ausgestaltung der Erfindung werden aus den vom Unterschied der Fühlhebelstellungen abgeleiteten Signalen - als Maß für die vom Capstan zuviel bzw. zuwenig transportierte Bandlänge - Zahlenwerte berechnet, mit welchen die Zählwerte der vom Capstan-Tacho abgenommenen Impulse - durch Subtraktion bzw. Addition - korrigiert werden. Mit diesem korrigierten Meßwert ergibt sich eine sehr genaue Berechnung des Wickeldurchmessers.

Ein Ausführungsbeispiel der Erfindung ist in der Zeichnung dargestellt und in der nachfolgenden Beschreibung näher erläutert. Es zeigen:
- Fig. 1: die Prinzipdarstellung einer Bandführungseinrichtung,
- Fig. 2: eine Bandführungseirrichtung mit einem Blockschaltbild für die Servoregelung.

In beiden Figuren vorkommende gleiche Teile sind mit gleichen Bezugszeichen versehen.

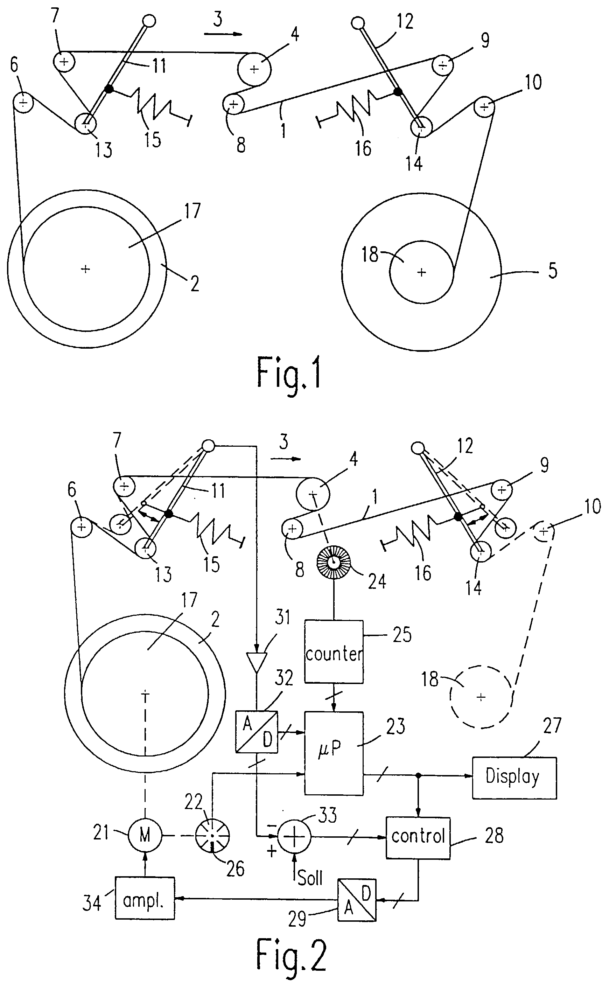

In Fig. 1 ist eine Bandführungseinrichtung für einen Laufbildfilm 1 in einem Filmabtaster dargestellt. Der Laufbildfilm 1 wird von einer Vorratsspule 2 in Richtung des Pfeiles 3 über eine Filmantriebseinrichtung mittels Capstan 4 zu einer Aufwickelspule 5 transportiert. Im Verlaufe des Filmweges sind mehrere Umlenkrollen 6 bis 10 sowie an Fühlhebeln 11 und 12 drehbar gelagerte Rollen 13 und 14 vorgesehen. Die Fühlhebel 11 bzw. 12 werden mit Hilfe von Zugfedern 15 bzw. 16 so in einer bestimmten Lage gehalten, daß - wie mit dem System in der bereits oben zitierten EP 0 235 588 B1 angegeben - eine gewünschte Filmzugspannung erreicht wird und der Film 1 immer dicht am Capstan 4 anliegt.

Für die Berechnung des Durchmessers des Bandwickels 17 der Vorratsspule 2 bzw. des Bandwickels 18 der Aufwickelspule 5 wurde bisher die kurzzeitige Auslenkung der Fühlhebel 11 bzw. 12 nicht berücksichtigt. Die der Auslenkung der Fülllhebel 11 bzw. 12 entsprechende, vom Capstan 4 zusätzlich transportierte Filmlänge hat somit in diesen Fällen die berechneten Werte der Durchmesser der Bandwickel 17 bzw. 18 verfälscht.

In Fig. 2 ist zusätzlich zur oben beschriebenen Bandführungseinrichtung ein Blockschaltbild mit einer erfindungsgemäß verbesserten Servoregelung dargestellt. Der Übersichtlichkeit halber ist diese Servoregelung nur für die Vorratsspule 2 mit Bandwickel 17 in Verbindung mit dem Capstan 4 gezeigt, während der weitere Bandführungsverlauf zum Bandwickel 18 nur andeutungsweise und ohne Servoregelung gezeichnet ist. Die hiermit von der Auslerkung des Fühlhebels 12 erzeugten Signale sind dabei gegenüber den Signalen vom Fühlhebel 11 spiegelverkehrt.

Bisher war es üblich, für die Berechnung des Wickeldurchmessers die Länge des vom Capstan 4 transportierten Bandes bzw. Filmes 1 zu messen, für die der Wickelmotor 21 eine Umdrehung ausführt. Dazu wird einerseits das Signal der Motor-Tachoscheibe 22 einem Eingang eines Mikroprozessors 23 zugeführt, an dessen anderen Eingang ein von der Tachoscheibe 24 des Capstan 4 abgeleitetes und von einem Zähler 25 verarbeitetes 16 Bit-Signal anliegt. Dabei wird von dem auf der Tachoscheibe 22 aufgebrachten Zeichen 26 jeweils ein Impuls erzeugt, welcher den Zählvorgang im Mikroprozessor 23 startet. Der Mikroprozessor 23 gibt dann ein Signal aus, welches einerseits zur Anzeige der Restspielzeit bzw. der bisherigen Spielzeit auf einem Display 27 wiedergegeben werden kann und andererseits einem Eingang einer Regelschaltung 28 zugeführt wird. Am anderen Eingang der Regelschaltung 28 liegt ein Regelsignal an, welches vom Fühlhebelsignal (Istwert) nach Verstärkung mit Verstärker 31, Digitalisierung mit A/D-Wandler 32 und Soll-Ist-Vergleich mit Addierer 33 abgeleitet wird. Von der Regelschaltung 28 wird entsprechend der Abweichung vom Sollwert ein digitales Stellsignal abgegeben, welches im D/A-Wandler 29 in ein analoges Stellsignal gewandelt wird. Dieses Stellsignal wird dann einer Wickelverstärkerstufe 34 zugeführt, die das Drehmoment des mit der Abwickelspule 2 drehfest gekoppelten Wickelmotors 21 regelt. Die jeweilige Drehrichtung und Achsposition des Wickelmotors 21 wird bekanntlich durch Abtastung der Tachoscheibe 22 mit - in der Fig. nicht dargestellten - Sensorelementen bestimmt.

Die Bandwickel-Servoregelung zur Regelung der Bandzugspannung an der Aufwickelspule 5 entspricht dem für die Abwickel- oder Vorratsspule 2 Beschriebenen.

Zur exakten Berechnung des jeweiligen Wickeldurchmessers, in die auch die bei gewissen Betriebszuständen des Bandlaufwerkes (wie Anfahren, Richtungswechsel, Abbremsen) für kurze Zeit von den Fühlhebeln 11 bzw. 12 aufgenommene Länge des Films 1 einbezogen werden soll, wird das von der Stellung des Fühlhebels zu Beginn und am Ende der Messung abgeleitete Fühlhebelsignal über den A/D-Wandler 32 auch noch dem Mikroprozessor 23 zugeführt, von welchem dann ein entsprechend korrigierter Meßwert am Ausgang abgegeben wird. Dieser korrigierte Meßwert wird vom Mikroprozessor 23 in einfacher Weise dadurch erzeugt, daß die Anzahl der Capstan-Tachoimpulse für die vom Capstan 4 - entsprechend der von den Fühlhebeln 11 bzw. 12 aufgenommenen - zuviel bzw. zuwenig transportierte Filmlänge vom Zählerstand subtrahiert bzw. zu diesem addiert wird.

Die beschriebene Erfindung ist unabhängig vom verwendeten Bandmaterial, sei dieses beispielsweise kinomatografisches Filmmaterial oder ein Magnetband. Sie eignet sich prinzipiell für alle Vorrichtungen mit einem Bandlaufwerk, bspw. auch für Magnetische Bandaufzeichnungs- und/oder Wiedergabegeräte.

## Patentansprüche

1. Kinematografische Vorrichtung, insbesondere ein Fiimabtaster, mit einem Servoregelsystem für ein Filmlaufwerk mit einer ersten Spule (2) und einer zweiten Spule (5), jeweils einem jeder Spule zugeordneten Wickelmotor, je einem Filmzugfühlhebel (11, 12), einem mit dem Film (1) in Wirkverbindung stehenden Filmantrieb mittels Capstan (4), Mitteln zur Erzeugung von die Drehzahl und Drehrichtung der Spulen, die Längsgeschwindigkeit des Filmes und die Stellung der Filmzugfühlhebel (11, 12) anzeigenden Signale und einem Mikroprozessor (23), von dem in Abhängigkeit der vorgenannten, sich auf die Filmgeschwindigkeit sowie die Drehzahlen der Spulen beziehenden Signale der Durchmesser der auf den Spulen (2, 5) befindlichen Filmwickel (17, 18) berechnet wird,
dadurch gekennzeichnet,
daß in die Berechnung der Durchmesser der Filmwickel (17, 18) die von der Stellung der Filmzugfühlhebel (11, 12) abhängigen Signale einbezogen werden, indem die Stellung jedes Fühlhebels zu Beginn und am Ende der Messung der Filmlänge pro Wickelumdrehung erfaßt wird und das davon abgeleitete Signal für die Korrektur des bei der Messung der Filmlänge abgeleiteten Wertes dient.

2. Kinematografische Vorrichtung nach Anspruch 1,
dadurch gekennzeichnet,
daß die Messung der Bandlänge pro Wickelumdrehung durch Zählung der Capstan-Tachoimpulse erfolgt.

3. Kinematografische Vorrichtung nach Anspruch 2,
dadurch gekennzeichnet.
daß aus den vom Unterschied der Fühlhebelstellungen abgeleiteten Signalen - als Maß für die vom Capstan (4) zuviel bzw. zuwenig transportierte Bandlänge - Zahlenwerte berechnet werden, mit welchen die Zählwerte der vom Capstan-Tacho abgenommenen Impulse - durch Subtraktion bzw. Addition - korrigiert werden.

4. Magnetisches Bandaufzeichnungs- bzw. Wiedergabesystem mit einem Servoregelsystem für ein Bandlaufwerk mit einer ersten Spule (2) und einer zweiten Spule (5), jeweils einem jeder Spule zugeordneten Wickelmotor, je einem Bandzugfühlhebel (11, 12), einem mit dem Band in Wirkverbindung stehenden Bandantrieb mittels Capstan (4), Mitteln zur Erzeugung von die Drehzahl und Drehrichtung der Spulen, die Längsgeschwindigkeit des Bandes und die Stellung der Bandzugfühlhebel (11, 12) anzeigenden Signale und einem Mikroprozessor (23), von dem in Abhängigkeit der vorgenannten, sich auf die Bandgeschwindigkeit sowie die Drehzahlen der Spulen beziehenden Signale der Durchmesser der auf den Spulen (2, 5) befindlichen Bandwickel (17, 18) berechnet wird,
dadurch gekennzeichnet,
daß in die Berechnung der Durchmesser der Bandwickel (17, 18) die von der Stellung der Bandzugfühlhebel (11, 12) abhängigen Signale einbezogen werden, indem die Stellung jedes Fühlhebels zu Beginn und am Ende der Messung der Bandlänge pro Wickelumdrehung erfaßt wird und das davon abgeleitete Signal für die Korrektur des bei der Messung der Bandlänge abgeleiteten Wertes dient.

5. Magnetisches Bandaufzeichnungs- bzw. Wiedergabesystem nach Anspruch 3,
dadurch gekennzeichnet,
daß die Messung der Bandlänge pro Wickelumdrehung durch Zählung der Capstan-Tachoimpulse erfolgt.

6. Magnetisches Bandaufzeichnungs- bzw. Wiedergabesystem nach Anspruch 4,
dadurch gekennzeichnet,
daß aus den vom Unterschied der Fühlhebelstellungen abgeleiteten Signalen - als Maß für die vom Capstan (4) zuviel bzw. zuwenig transportierte Bandlänge - Zahlenwerte berechnet werden, mit welchen die Zählwerte der vom Capstan-Tacho abgenommenen Impulse - durch Subtraktion bzw. Addition - korrigiert werden.

7. Servoregelsystem für ein Bandlaufwerk mit einer ersten Spule (2) und einer zweiten Spule (5), jeweils einem jeder Spule zugeordneten Wickelmotor, je einem Bandzugfüllhebel (11, 12), einem mit dem Band in Wirkverbindung stehenden Bandantrieb mittels Capstan (4), Mitteln zur Erzeugung von die Drehzahl und Drehrichtung der Spulen, die Längsgeschwindigkeit des Bandes und die Stellung der Bandzugfühlhebel (11, 12) anzeigenden Signale und einem Mikroprozessor (23), von dem in Abhängigkeit der vorgenannten, sich auf die Bandgeschwindigkeit sowie die Drehzahlen der Spulen beziehenden Signale der Durchmesser der auf den Spulen (2, 5) befindlichen Bandwickel (17, 18) berechnet wird,
dadurch gekennzeichnet,
daß in die Berechnung der Durchmesser der Bandwickel (17, 18) die von der Stellung der Bandzugfüllhebel (11, 12) abhängigen Signale einbezogen werden, indem die Stellung jedes Fühlhebels zu Beginn und am Ende der Messung der Bandlänge pro Wickelumdrehung erfaßt wird und das davon abgeleitete Signal für die Korrektur des bei der Messung der Bandlänge abgeleiteten Wertes dient.

8. Servoregelsystem nach Anspruch 7,
dadurch gekennzeichnet,
daß die Messung der Bandlänge pro Wickelumdrehung durch Zählung der Capstan-Tachoimpulse erfolgt.

9. Servoregelsystem nach Anspruch 8,
dadurch gekennzeichnet,
daß aus den vom Unterschied der Fülhebelstellungen abgeleiteten Signalen - als Maß für die vom Capstan (4) zuviel bzw. zuwenig transportierte Bandlänge - Zahlenwerte berechnet werden, mit welchen die Zählwerte der vom Capstan-Tacho abgenommenen Impulse - durch Subtraktion bzw. Addition - korrigiert werden.
